Europäisches Patentamt

European Patent Office

Office européen des brevets

(19)

(11) Numéro de publication: **0 211 763**
**A1**

(12) ## DEMANDE DE BREVET EUROPEEN

(21) Numéro de dépôt: **86401723.1**

(22) Date de dépôt: **01.08.86**

(51) Int. Cl.⁴: **G 06 F 13/42**

(30) Priorité: **06.08.85 FR 8512000**

(43) Date de publication de la demande:
**25.02.87 Bulletin 87/9**

(84) Etats contractants désignés:
**BE CH DE FR GB IT LI NL**

(71) Demandeur: **BULL S.A.**
**121 avenue de Malakoff P.B. 193.16**
**F-75764 Paris Cédex 16(FR)**

(72) Inventeur: **Planteline, Pierre**
**11, rue Verlaine**
**F-38320 Eybens(FR)**

(74) Mandataire: **Debay, Yves et al,**
**BULL S.A. Industrial Property Department 25 avenue de la**
**Grande-Armée**
**F-75016 Paris(FR)**

(54) **Procédé d'échange de données entre un microprocesseur et une mémoire et dispositif permettant une mise en oeuvre du procédé.**

(57) L'invention concerne un procédé d'échange asynchrone entre un microprocesseur (1) et une mémoire dynamique (2) gérée par un contrôleur mémoire (5) caractérisé en ce qu'il comporte une étape de génération d'un signal d'acquittement /AC3 s'identifiant soit au signal /AC1 activé lorsque la mémoire n'est pas disponible lors de la demande d'échange, soit à un signal d'acquittement anticipé /AC2 synchrone de la demande d'échange matérialisée par un signal /AS délivré par le microprocesseur (1) lorsque la mémoire non occupée est attribuée au microprocesseur (1) et une étape de génération d'un signal de masquage F assurant le masquage d'un signal /AC3 dépendant du signal d'acquittement anticipé /AC2, pour garantir un temps de transfert minimum compatible avec le temps d'accès T de la mémoire.

L'invention concerne également le dispositif permettant la mise en oeuvre du procédé.

EP 0 211 763 A1

PROCEDE D'ECHANGE DE DONNEES ENTRE UN MICROPROCESSEUR ET UNE MEMOIRE ET DISPOSITIF PERMETTANT UNE MISE EN OEUVRE DU PROCEDE

La présente invention concerne un procédé d'échange de données entre un microprocesseur et une mémoire et le dispositif permettant la mise en oeuvre de ce procédé. Ce procédé peut s'appliquer à tout type de mémoire.

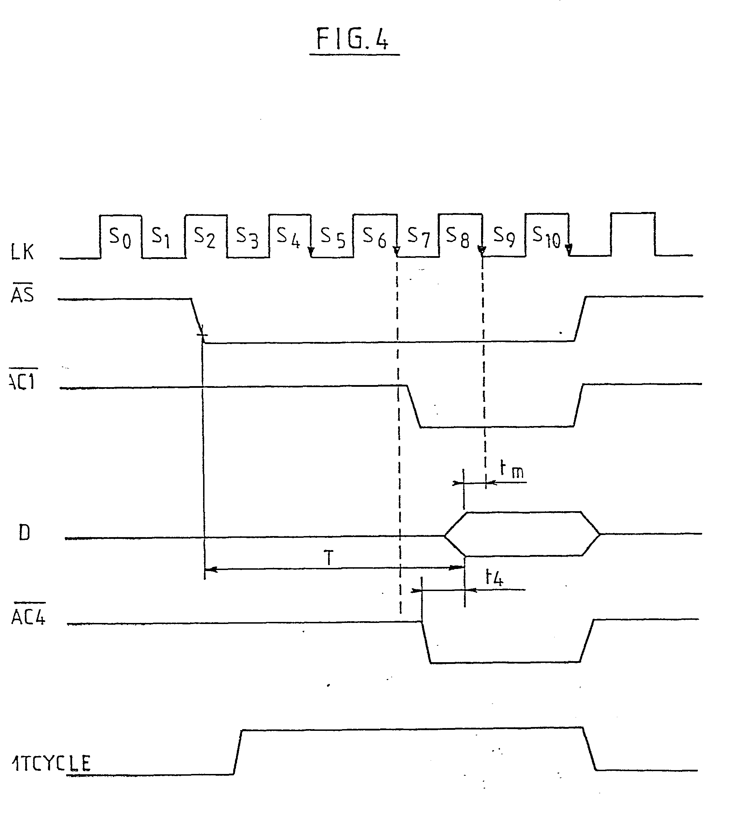

Il est connu dans les procédés d'échange asynchrone de données entre un microprocesseur et une mémoire d'utiliser le signal d'acquittement généré par le circuit contrôleur de la mémoire pour signaler au microprocesseur que les données vont apparaître sur le bus donnée le reliant à la mémoire, afin que celui-ci prenne en compte ces données. En général les données apparaissent sur le bus un temps T après le signal AS qui valide les adresses du microprocesseur. Par construction les contrôleurs de mémoire délivrent un signal d'acquittement dans un laps de temps t4 (figure 4) précédant l'apparition des données. Pour un microprocesseur tel que le MOTORALA 68.010 utilisant une horloge de fréquence 10 MHz, le signal d'acquittement AC4 doit apparaître au plus tôt 65 ns avant les données. (dans le cas où AC4 est asynchrone par rapport à l'horloge du microprocesseur).

Par ailleurs pour être pris en compte le signal AC4 doit apparaître au plus tard 20 ns avant le front descendant de l'horloge pilotant le microprocesseur. Enfin pour que le microprocesseur puisse prendre en compte correctement les données celles-ci doivent être disponibles sur le bus donnée au moins 15 ns (tm) avant le front descendant de l'horloge qui pilote le microprocesseur. L'ensemble de ces contraintes temporelles font que, le microprocesseur et la mémoire fonctionnant de façon asynchrone, dans la majorité des cas la prise en compte des données s'effectuera avec un cycle d'attente supplémentaire, comme représenté à la figure 4.

L'invention a pour but un procédé permettant d'éviter ces cycles d'attente supplémentaires qui ralentissent les échanges.

Ce premier but est atteint par le fait que le procédé d'échange asynchrone entre un microprocesseur et une mémoire dynamique gérée par un contrôleur mémoire comporte une étape de génération d'un signal d'acquittement /AC3, s'identifiant soit au signal /AC1 activé lorsque la mémoire n'est pas disponible lors de la demande d'échange, soit à un signal d'acquittement anticipé /AC2 synchrone de la demande d'échange matérialisée par un signal /AS délivré par le microprocesseur lorsque la mémoire non occupée est attribuée au microprocesseur, et une étape de génération d'un signal de masquage F assurant le masquage du signal d'acquittement /AC3 dépendant du signal d'acquittement anticipé /AC2 pour garantir un temps de transfert minimum compatible avec le temps d'accès T de la mémoire.

Un autre but de l'invention est de réaliser un dispositif permettant la mise en oeuvre du procédé ci-dessus.

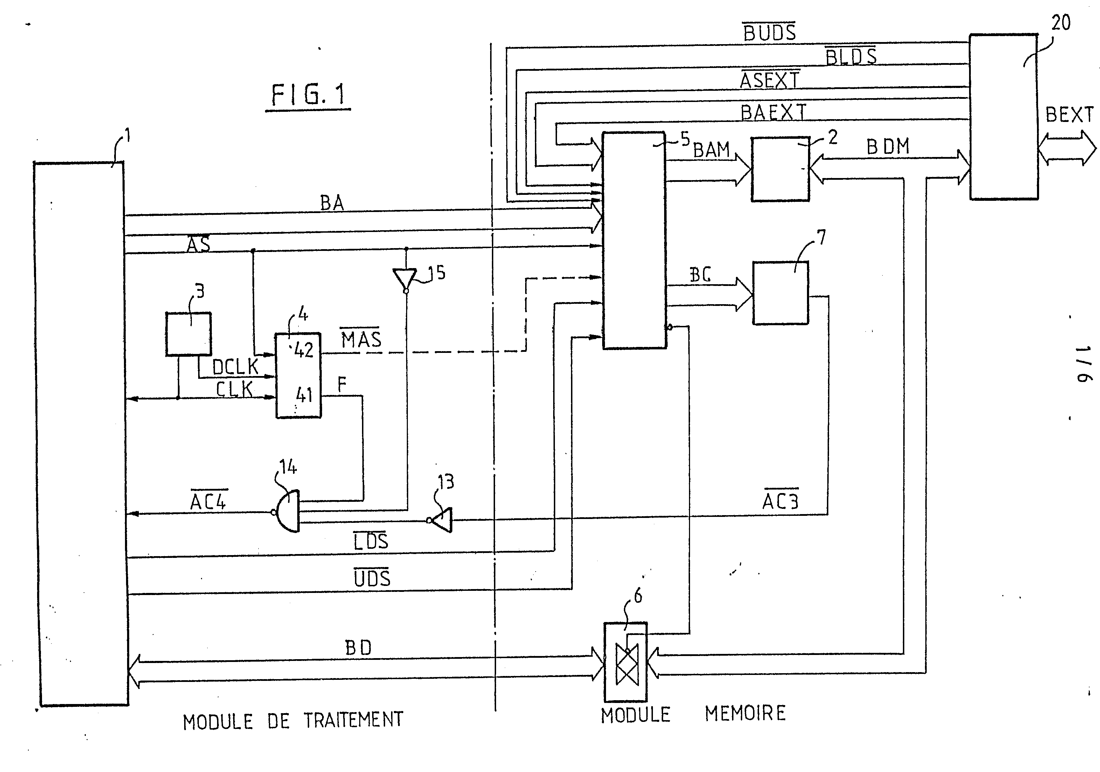

Ce but est atteint par le fait que le dispositif comprend un circuit de génération d'un signal d'acquittement /AC3 suite à une demande d'échange matérialisée par le signal /AS, un circuit de génération du signal de masquage F à partir de la demande d'échange /AS de l'unité de traitement et des signaux CLK, DCLK d'une horloge et une porte NON-ET recevant d'une part le signal d'acquittement AC3 et d'autre part le signal de masquage F, (Figure 1).

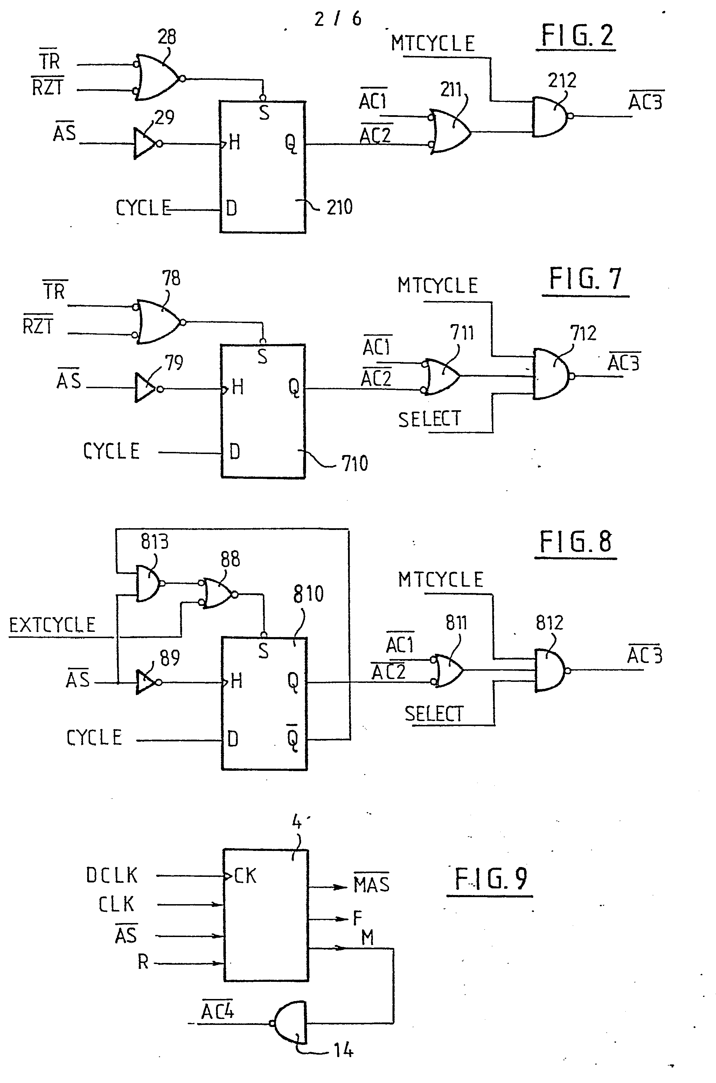

Selon une autre caractéristique le dispositif comprend une porte NON-ET de validation de la transmission du signal d'acquittement /AC3 lorsque le contrôleur mémoire attribue la mémoire au microprocesseur en délivrant le signal MTCYCLE, (Figure 2).

Selon une autre caractéristique le circuit de génération comprend une porte NON-ET recevant d'une part le signal d'acquittement /AC1 activé lorsque la mémoire n'est pas disponible, d'autre part le signal d'acquittement anticipé /AC2 délivré par la sortie Q d'une bascule (210) du type D, dont l'entrée d'horloge H reçoit le signal de demande d'échange inversé AS, l'entrée D, un signal CYCLE délivré par le contrôleur indiquant que la mémoire travaille et l'entrée de mise à 1, un signal délivré par la sortie d'une porte ET, reçoit d'une part un signal /TR délivré par le contrôleur, et indiquant un temps de repos de la mémoire, d'autre part, un signal /RTZ délivré par l'alimentation et indiquant une réinitialisation.

Un autre but de l'invention est un dispositif permettant la mise en oeuvre du procédé avec un module mémoire dynamique fonctionnant avec anticipation, ce qui est intéressant lorsque le module de traitement comprend une unité de gestion mémoire (non représentée) ne traitant pas les bits de poids faibles qui sont utilisés par le strobe d'adresse ligne (/RAS) des boitiers mémoire dynamique. Ce but est atteint par le fait qu'en outre dans le dispositif, la porte NON-ET de validation de la transmission du signal d'acquittement reçoit également un signal SELECT délivré par le contrôleur et indiquant que le module mémoire s'est décodé. (Figure 7).

Un dernier but de l'invention est un dispositif permettant la mise en oeuvre du procédé avec une mémoire vive statique ou une mémoire morte.

Ce but est atteint par le fait que le circuit de génération comprend une porte NON-ET recevant d'une part le signal d'acquittement /AC1 activé lorsque la mémoire n'est pas disponible, d'autre part le signal d'acquittement anticipé /AC2 délivré par la sortie Q d'une bascule (210) du type D, dont l'entrée d'horloge H reçoit le signal de demande d'échange inversé AS, l'entrée D, un signal CYCLE délivré par le contrôleur indiquant que la mémoire travaille et l'entrée de mise à 1, un signal délivré par la sortie d'une porte ET, que la porte NON-ET de validation de la transmission du signal d'acquittement reçoit également un signal SELECT délivré par le contrôleur et indiquant que le module mémoire s'est décodé (Figure 7), et que la porte ET reçoit d'une part un signal /EXTCYCLE délivré par le contrôleur et indiquant un cycle mémoire extérieur au microprocesseur et d'autre part la sortie d'une porte NON-ET dont une entrée reçoit le signal /AS de demande d'échange et une deuxième entrée la sortie /Q de la bascule.(Figure 8).

D'autres caractéristiques et avantages de la présente invention apparaîtront plus clairement à la lecture de la description, faite en référence aux dessins ci-après dans lesquels :

La figure 1 représente le schéma des circuits permettant la mise en oeuvre du procédé;

La figure 2 représente le schéma du circuit de génération du signal d'acquittement utilisé dans le circuit de la figure 1;

La figure 3 représente l'évolution dans le temps des différents signaux permettant la mise en oeuvre du procédé lors d'un cycle de lecture;

La figure 4 représente l'évolution des signaux lorsque le procédé n'est pas mis en oeuvre dans un cycle de lecture;

La figure 5 représente l'évolution des signaux lorsque le procédé n'est pas mis en oeuvre dans un cycle d'écriture;

La figure 6 représente l'évolution des signaux lorsque le procédé est mis en oeuvre dans un cycle de lecture appliqué à une mémoire dynamique fonctionnant avec anticipation;

La figure 7 représente le schéma du circuit de génération du signal d'acquittement lors d'une utilisation d'une mémoire dynamique fonctionnant avec anticipation;

La figure 8 représente le schéma du circuit de génération du signal d'acquittement, lors d'une utilisation avec une mémoire morte ou une mémoire vive statique.

La figure 9 représente une variante de cablage du réseau logique programmable pour augmenter le nombre de cycles d'attente. La figure 1 représente le dispositif permettant la mise en oeuvre du procédé dans lequel une unité de traitement (1) constituée par un microprocesseur reçoit le signal d'horloge CLK émis par le circuit (3). Cette unité de traitement est reliée à un module mémoire dynamique (2) par un bus de données BD, un circuit tampon intermédiaire (6) et le bus de données mémoire BDM. L'unité de traitement est reliée par son bus d'adresse BA à un contrôleur mémoire (5) qui pilote le bus adresse mémoire BAM véhiculant les signaux d'adresses et de contrôle de la mémoire (2). Cette mémoire (2) peut également être accédée par un bus extérieur BEXT dont l'interface au module mémoire (constitué par la mémoire (2), le contrôleur (5) et la logique associée) est assurée à l'aide d'un circuit (20) fournissant un bus d'adresses extérieur BAEXT au contrôleur (5). Ce circuit (20) est également rélié au bus de données BDM de la mémoire (2).

Le contrôleur mémoire (5) prend également en compte le signal /AS délivré par l'unité de traitement (1) et matérialisant la demande d'échange de l'unité de traitement (1), le signal /ASEXT délivré par le circuit (20) et matérialisant la demande d'échange provenant du bus extérieur et le signal de la demande de rafraîchissement de la mémoire (signal non représenté sur la figure 1). Le contrôleur mémoire (5) pilote à l'aide d'un bus de commande BC un circuit (7) fournissant un signal d'acquittement interne /AC3 qui mis en forme par une logique (4, 13, 14, 15) du module de traitement, générera le signal d'acquittement /AC4 au microprocesseur.

Le contrôleur (5) reçoit aussi les signaux de validation des données de poids forts du microprocesseur et du bus externe respectivement /UDS et /BUDS, les signaux de validation des données de poids faibles du microprocesseur et du bus externe respectivement /LDS et /BLDS et pour certaines applications le signal /MAS délivré par le réseau logique programmable (4).

La logique d'arbitrage réglant l'accès à la mémoire est comprise dans le contrôleur (5) et n'a pas été représentée car elle n'est pas indispensable à la compréhension du procédé.

Le signal d'acquittement interne /AC3 délivré par le circuit (7) est envoyé sur un inverseur (13) dont la sortie est branchée à une entrée d'une porte NON-ET (14) à trois entrées. La deuxième entrée de la porte NON-ET (14) reçoit la sortie d'un inverseur (15) recevant en entrée le signal /AS délivré par l'unité de traitement (1), signal matérialisant une demande d'échange de l'unité de traitement (1). La troisième entrée de la porte NON-ET (14) reçoit le signal F (fenêtre de masquage) délivré par la sortie (41) d'un réseau logique programmable (4).

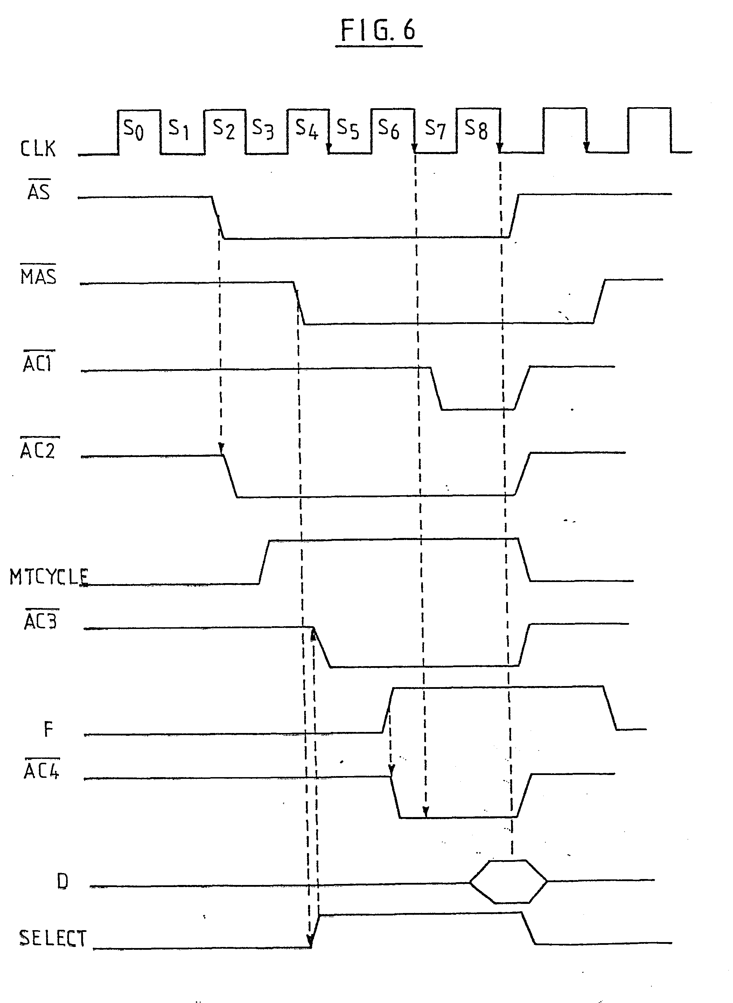

Une deuxième sortie (42) du réseau logique programmable (4) délivre un signal /MAS qui change de niveau sur le front montant suivant le changement de niveau du signal /AS comme représenté figure 6. Le réseau logique programmable (4), (PAL) reçoit en entrée d'une part le signal /AS, d'autre part un signal CLK et un signal d'horloge double DCLK délivrés par le circuit d'horloge (3).

L'équation logique qui permet d'obtenir le signal MAS et de programmer le réseau (4) est la suivante :

MAS: = AS./CLK + MAS./(/AS.CLK).

A partir du signal MAS le réseau logique génère un deuxième signal F qui change de niveau une période d'horloge après le signal MAS. Ce signal F répond à l'équation logique suivante qui permet de programmer le réseau logique (4).

F: = MAS./CLK + F./(/AS.CLK)

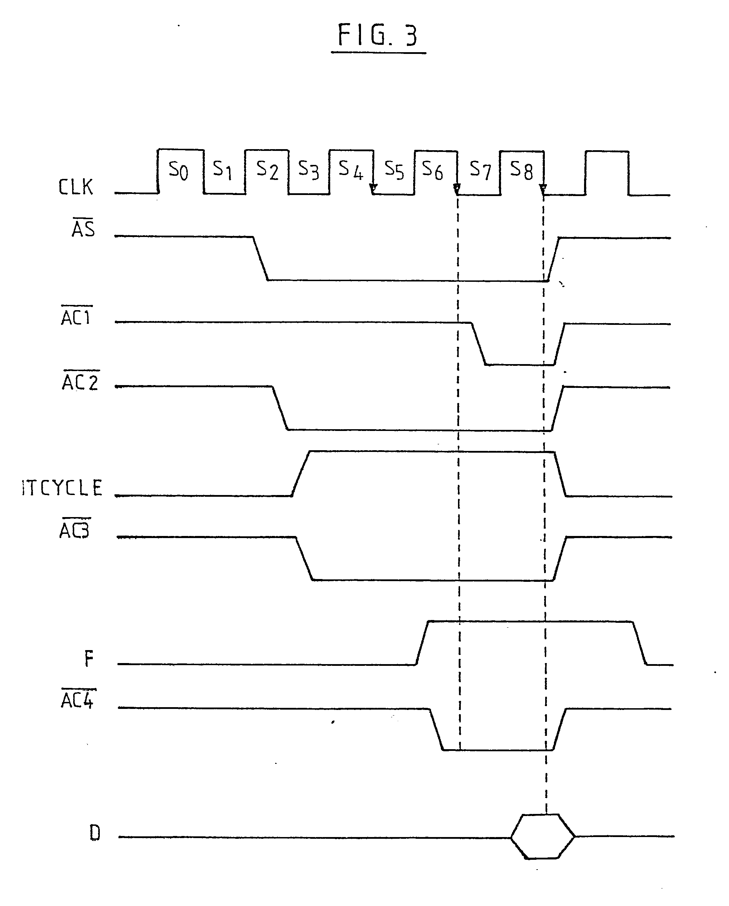

Tel qu'il est programmé, le signal F permet de garantir à la mémoire un temps de transfert correspondant à 1 cycle d'attente. Si le signal F n'était pas utilisé, il faudrait que la mémoire puisse émettre un signal d'acquittement /AC2' centré dans la période d'horloge correspondant aux phases S5-S6 (Fig.3). /AC2' ne serait activé que lorsque la mémoire serait disponible sur la demande d'échange, de manière à garantir que le transfert s'effectue avec 1 cycle d'attente, pas moins, pas plus. Pas plus pour ne pas augmenter la durée de l'échange inutilement, pas moins car il faut 1 cycle d'attente minimum dans le cas de cet exemple pour que le transfert s'effectue correctement. Cette solution est plus délicate à réaliser bien qu'elle paraisse équivalente à celle faisant intervenir les signaux /AC2 et F. En effet, la mémoire doit pouvoir émettre /AC2' dans une "fenêtre" dont l'étroitesse apparaît comme une contrainte compte tenu de la dispersion existant sur les temps de propagation des boitiers logiques. La largeur de cette fenêtre peut s'exprimer de la façon suivante :

$$TCLK - \left[\Delta(/AS)MT + \Delta(/AC3)MT + \Delta(/AC3)MM + 2\ tpd\ BUS\right] - \left[Th\ (/AC4) + Tsu\ (/AC4)\right]$$

TCLK est la période de l'horloge CLK du microprocesseur

$\Delta$(/AS)MT repésente la dispersion qui peut exister sur le signal /AS émis par le module de traitement.

$\Delta$(/AC3)MM chiffre la dispersion du signal /AC3 émis par le module mémoire par rapport au signal /AS.

$\Delta$(/AC3)MT est la dispersion sur le temps de réception du signal /AC3 par le module de traitement . (dispersion sur le temps s'écoulant entre /AC3 et /AC4).

Tpd BUS caractérise le temps de propagation maximum des signaux /AS et /AC3 entre le Module de Traitement et le Module Mémoire.

Th (/AC4) représente la zone de visibilité possible du signal /AC4 par le microprocesseur, après un front descendant de l'horloge CLK. Ce temps est estimé à 20 ns pour 68010, 10 Mhz et correspondrait, s'il était clairement indiqué par le contructeur, au temps de maintien minimum à respecter sur /AC4.

Tsu (/AC4) est le temps de préaffichage minimum à respecter sur /AC4 par rapport au front descendant de CLK pour que le signal d'acquittement soit pris en compte ( à coup sûr) par le microprocesseur.

Généralement, on constatera que la largeur de la fenêtre prend une valeur négative, ce qui signifie que cette solution n'est pas applicable sans artifice supplémentaire, alors que le procédé utilisant le signal de masquage F permet de résoudre le problème. Pour rendre la largeur de la fenêtre positive, on pourra, choisir des composants plus rapides (ce qui s'accompagenra généralement d'une moins bonne immunité au bruit), diminuer la dispersion sur l'émission de /AC3 et (ou) celle du temps de réception de /AC3 par l'adjonction de réglage sur le module mémoire et (ou) le module de traitement. Dans les cas les plus difficiles, il pourra être nécessaire de rendre dépendants les réglages du module de traitement et du module mémoire, ce qui revient à apairer les modules, solution peu intéressante industriellement.

Le procédé demandant au module mémoire de cadrer l'émission d'un signal d'acquittement dans une période de l'horloge CLK conduit donc à de(s) réglage(s) spécifique(s) et du type analogique, alors que la mise en oeuvre du signal d'acquittement anticipé /AC2 et du signal de masquage F ne requiert sur le module de traitement qu'un réglage non spécifique du type digital et défini à l'avance.

La figure 2 représente un mode de réalisation du circuit (7) de génération du signal d'acquittement interne /AC3. Ce circuit comprend une porte ET (28) à deux entrées, recevant sur sa première entrée un signal /TR (temps de repos du module mémoire) et sur sa deuxième entrée un signal /RZT (d'initialisation du module mémoire). Ce signal /RZT, est un signal d'initialisation de la machine généré par l'alimentation (non représenté) lors d'une mise sous tension de celle-ci ou d'une coupure secteur. Il est actif au niveau bas pendant 20ms minimum et est utilisé pour effectuer une initialisation de tous les modules. Le signaL /TR quant à lui est délivré par le contrôleur (5), du module mémoire. La sortie de la porte ET (28) est reliée à l'entrée S (mise à "1") d'une bascule (210) de type D. L'entrée d'horloge H de cette bascule (210) reçoit le signal de sortie d'un inverseur 29 dont l'entrée reçoit le signal /AS provenant du module de traitement (1). L'entrée D de la bascule (210) reçoit un signal CYCLE délivré par le contrôleur (5).

La sortie Q de la bascule (210) est branchée à la première entrée d'une porte NON-ET (211) à deux entrées et dont la deuxième entrée reçoit un signal /AC1 délivré par le contrôleur (5). La sortie de la porte NON-ET (211) est branchée à une entrée d'une porte NON-ET (212) à deux entrées. La deuxième entrée de la porte NON-ET (212) reçoit un signal MTCYCLE délivré par le contrôleur (5). L'ensemble des liaisons assurant la transmission des signaux /TR, /RZT, CYCLE, /AC1, MTCYCLE constitue le bus BC.

Le signal /AC3 est le signal d'acquittement interne généré par le module mémoire au module de traitement. Il provient soit de /AC1, signal d'acquittement classique délivré normalement par le contrôleur (5) et activé de manière à respecter dans le cas d'un fonctionnement asynchrone le temps minimum autorisé par le microprocesseur entre sa réception et l'instant où les données sont valides, soit de /AC2, signal d'acquittement anticipé qui ne sera transmis que si la mémoire était disponible au moment où le module de traitement a présenté la demande d'accès et que l'arbitre du contrôleur (5) a attribué la mémoire au module de traitement MT. Les signaux /AC1 et /AC2 sont validés par le signal MTCYCLE délivré par le contrôleur (5). Ce signal MTCYCLE est actif lorsque la mémoire effectue un cycle pour le module de traitement. Le signal /AC2 est généré par la sortie Q d'une bascule (210) du type D qui reçoit comme horloge le signal /AS inversé par la porte (29) et comme donnée le signal CYCLE délivré par le contrôleur (5). Ce signal CYCLE est actif chaque fois que la mémoire travaille. La porte ET (28) dont la sortie est reliée à l'entrée S de la bascule (210) force le signal /AC2 au niveau haut (correspondant à une invalidation) pendant les temps de repos de la mémoire indiqués par le signal /TR au niveau bas ou lors d'une initialisation du module (signal /RZT au niveau bas).

La manière dont sera générée le signal /AC2 dépend des trois cas de figure suivants :

1 - la mémoire est libre lorsque le module de traitement en demande l'accès et est attribuée au module de traitement par l'arbitre du contrôleur (5). Dans ce cas les signaux /TR et /RZT sont à 1 et le signal CYCLE est à zéro. Lorsque le signal /AS est activé, le signal /AC2 passe au niveau bas (actif, figure 3) et le signal /AC3 est activé lorsque le signal MTCYCLE est validé (indiquant une attribution de la mémoire au module de traitement). La fin du transfert signalée par l'invalidation du signal /AS provoque l'invalidation du signal MTCYCLE, donc celle du signal /AC3. La mémoire entre dans la phase de repos: ce qui implique que le signal /TR est activé et invalide le signal /AC2.

2 - la mémoire est libre lorsque le module de traitement en demande l'accès, mais n'est pas attribuée au module de traitement par l'arbitre du contrôleur (5). Lorsque le signal /AS est activé on retrouve les conditions du cas précédent. Le signal /AC2 est donc activé. Par contre le signal MTCYCLE n'est pas activé pendant le cycle en cours car la mémoire ne travaille pas pour le module de traitement. La fin du transfert en cours sera signalée par l'activation du signal /TR qui invalidera le signal /AC2. Lorsque la mémoire sera affectée au module de traitement, seul le signal /AC1 sera transmis.

3 - la mémoire n'est pas libre lorsque le module de traitement en demande l'accès. Si le signal /TR est actif (phase de repos), le signal /AC2 est passé au niveau haut (invalidation). Si le signal /TR n'est pas actif, le signal CYCLE est par contre validé car la mémoire est occupée lorsque le signal /AS est activé et le signal /AC2 reste invalidé. Lorsque la mémoire sera attribuée au module de traitement (MTCYCLE validé) seul le signal /AC1 sera transmis.

La figure 4 représente également les signaux échangés lors d'un cycle de lecture dans les conditions suivantes: mémoire libre lorsque le signal /AS est validé, mémoire attribuée au module de traitement par l'arbitre du contrôleur (5), mais le procédé n'est pas mis en oeuvre. Sur cette figure, on voit que les données auraient pu être lues sur le front descendant de S8 pour autant que la validation du signal d'acquittement /AC4 ait été enregistrée par l'unité de traitement au front descendant précédent S7. Ceci n'est pas possible dans le cas du fonctionnement classique, ne mettant pas en oeuvre le procédé, car la validation de $/AC_4$ ne peut être détectée que sur le front descendant de S8. Par conséquent, la prise en compte des données ne peut se faire que sur le front descendant de S10 c'est-à-dire avec un cycle d'attente par rapport avec la disponibilité des données D. La figure 3 représente la chronologie des signaux échangés dans un cycle de lecture mettant en oeuvre le procédé lorsque la mémoire est libre lors de la validation du signal /AS et lorsque la mémoire est attribuée au module de traitement par l'arbitre du contrôleur (5) (ceci correspond au premier cas vu ci-dessus). Comme on l'a vu précédemment le signal /AC3 est activé lorsque le signal MTCYCLE est validé et le signal /AC2 est activé. Le signal /AC3 étant activé, la validation du signal F entraîne l'activation du signal /AC4 avec un léger retard dû au temps de propagation de la porte NON-ET (14). Dans le cas de la figure 3 le signal F est activé sur le deuxième front montant de l'horloge suivant la validation du signal /AS.

Ce retard entre la validation du signal /AS et l'activation du signal F a été programmé sur le réseau logique (4), en fonction du temps T séparant le signal de demande d'échange /AS de l'apparition des signaux de données D, de façon que la validation du signal d 'acquittement du module de traitement /AC4 soit pris en compte par l'unité de traitement sur le front d'horloge descendant S6 qui précède le front descendant S8 de prise en compte des données.

Il est bien évident que ce retard peut-être modifié, selon les besoins, de façon que les données soient lues sur le premier front descendant se présentant après l'apparition des données. Lors de la fin de cycle signalée par la désactivation de /AS, le signal /AC4 est invalidé tandis que le signal de fenêtre F est maintenu pendant encore un cycle d'horloge CLK avant d'être invalidé.

Dans la figure 4 on a représenté les signaux d'acquittement /AC1 et /AC4 qui sont produits normalement par le contrôleur mémoire à la suite de la réception du signal de validation des adresses /AS. Ainsi sur cette figure on voit que la mémoire a besoin d'un intervalle de temps T pour délivrer ses données à la suite de la réception du signal de validation d'adresse. Lorsqu'aucune relation de phase existe entre le fonctionnement de la mémoire et l'horloge du microprocesseur, le constructeur du microprocesseur, quant à lui impose que le signal d'acquittement soit émis vers le microprocesseur au plus tôt au bout d'un temps $t4 = 65$ ns avant les données. Par ailleurs ce signal d'acquittement /AC4 pour être vu par le microprocesseur doit être disponible au plus tard au bout d'un temps $t1 = 20$ ns avant le front descendant de l'horloge et les données pour être lues par le microprocesseur doivent être disponibles au bout d'un temps tm au moins égal à 15 ns avant le front descendant de l'horloge. Compte tenu de ces contraintes on s'aperçoit que dans la majorité des cas de fonctionnement un cycle d'attente supplémentaire est introduit inutilement. La figure 4 représente pour /AC1 et D la situation défavorable dans laquelle le signal d'acquittement /AC1 ne peut pas être pris en compte sur le front descendant S6 de l'horloge du microprocesseur . Par conséquent ce signal est pris en compte au front descendant S8 suivant et ce n'est qu'au front descendant S10 suivant que les données peuvent être prises en compte par le microprocesseur. Dans ce cas la durée de maintien des données et la durée du cycle de lecture est rallongée d'un cycle d'horloge du microprocesseur par rapport au fonctionnement représenté à la figure 3.

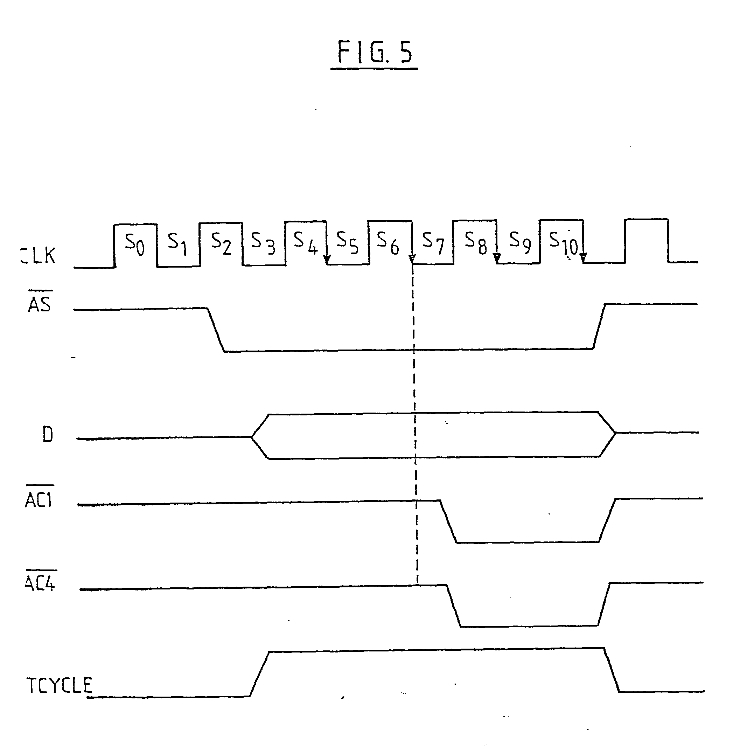

La figure 5 représente un cycle d'écriture dans lequel la mémoire (2) est libre lorsque le signal /AS est validé, la mémoire (2) est attribuée au module de traitement par l'arbitre mais le procédé de l'invention n'est pas mis en oeuvre comme pour le cycle de lecture de la figure 4. Pour un cycle d'écriture le contrôleur mémoire génère un signal d'acquittement /AC1 tenant compte du "temps de réaction mininum" du microprocesseur, au-delà duquel les signaux émis par le microprocesseur ne seront plus garantis valides. Le cas défavorable pour la mémoire est celui où l'émission du signal /AC1 est asynchrone par rapport à l'horloge CLK du microprocesseur. Le signal /AC4 est échantillioné à partir de la phase S4 sur tous les fronts descendants de CLK. On rappelle que pour être certain que le signal /AC4 soit pris en compte, il faut respecter un temps de préaffichage de 20 ns par rapport au front descendant de CLK. Cependant il est tout à fait possible qu'un microprocesseur voie le signal d'acquittement /AC4 actif bien que le temps de préaffichage soit violé. Dans un microprocesseur 68010 commercialisé par MOTOROLA fonctionnant avec une horloge à 10 Mhz, pour être certain que le signal d'acquittement ne soit pas pris en compte sur un front descendant de CLK, il ne faut le valider que 20 ns au moins après ce front. Un microprocesseur 68010 peut d'autre part invalider ses signaux immédiatement après le transfert, c'est-à-dire sur un front descendant

de CLK. Le temps minimum de réaction d'un microporcesseur 68010, 10 Mhz commercialisé par MOTOROLA peut donc être estimé à 80 ns (en faisant abstraction de la logique associée au microprocesseur). Le signal /AC1 est donc généré de manière à permettre à la mémoire de terminer son cycle d'écriture dans le cas où le microprocesseur réagit dans le temps minimum. Le signal /AC4 sera donc l'image du signal /AC1 chaque fois que le fonctionnement de la mémoire risque d'être désynchronisé par rapport au signal d'horloge CLK. (mémoire non disponible immédiatement pour le module de traitement lors de l'activation de /AS).

La figure 5 représente un cas de transfert avec deux cycles d'attente. Il est possible de concevoir une mémoire qui aurait pu se contenter d'un transfert avec un seul cycle d'attente, cependant la contrainte évoquée à propos du timing de /AC1 fait que ce signal risque de ne pas être vu actif à temps par le microprocesseur si le temps de préaffichage n'est pas respecté. Pour gagner ce cycle d'attente, le procédé peut à nouveau être appliqué. Les signaux obtenus (sauf pour les données) sont identiques à ceux de la figure 3. Il est tout à fait possible qu'une mémoire nécessite un nombre de cycles d'attente différents pour la lecture et l'écriture. Il suffit de fournir au PAL (4) le signal, issu du microprocesseur, fournissant le type de cycle (lecture ou écriture) et de programmer le signal de masquage en conséquence.

Supposons qu'il faille insérer 2 cycles d'attente en lecture et 1 seul en écriture. La sortie F du PAL (4) (Fig.9) pourrait être conservée mais ne serait plus reliée à une entrée de la porte 14. Une autre sortie séquentielle du PAL (4) (Fig.9) pourrait être utilisée pour générer le signal de masquage M dont l'équation serait la suivante :

M: = (R.F + /R. /MAS)./CLK + M. (/AS.CLK)

R est un signal issu du microprocesseur et fourni au PAL. Il indique le type de cycle : lecture ou écriture. Si un plus grand nombre de cycles d'attente étaient nécessaires, on pourrait réaliser un compteur de cycles d'attente en utilisant des sorties séquentielles du PAL et les faire intervenir dans l'équation du signal de masquage.

La figure 6 représente l'évolution des signaux lors de l'application du procédé à un ensemble comprenant un module de traitement et des modules mémoires dynamiques fonctionnant avec anticipation. Le mode de fonctionnement des mémoires dynamiques avec anticipation est intéressant lorsque toutes les adresses fournies par le module de traitement ne sont pas valides simultanément. C'est souvent le cas lorsqu'une unité de gestion mémoire est associée au microprocesseur. Les poids faibles de l'adresse, générée par le microprocesseur n'intervenant pas dans le processus de translation, (adresse physique découlant de l'adresse logique) sont utilisables par les mémoires lorsque /AS est activé. Les modules mémoires disponibles immédiatement pour un échange avec le module de traitement amorcent un cycle en mémorisant l'adresse ligne (activation du signal /RAS sur les mémoires), puis attendent de savoir s'ils sont concernés par l'échange avant de poursuivre le cycle. Un deuxième signal de validation issu du module de traitement valide les poids forts de l'adresse physique permettant au module concerné par l'échange de se décoder. Les autres modules mémoires terminent le cycle comme un cycle de rafraîchissement.

La figure 6 illustre un cycle de lecture sur le module mémoire concerné par l'échange. Lorsque /AS a été généré, le module était disponible pour le module de traitement (au temps d'arbitrage près). Le signal /MAS valide les poids forts de l'adresse et est généré par la sortie (42) du circuit (4): il est ici synchrone du front avant de la phase S4. Le module qui s'est reconnu peut alors transmettre /AC2. L'interprétation des autres signaux est la même que pour les cas précédents.

Une logique permettant de générer le signal d'acquittement /AC3 est représentée figure 7. Dans les figures 2, 7 et 8 on remarque que le premier chiffre des références correspond au numéro de la figure et les chiffres suivants correspondent à des éléments identiques. Ansi les références (28), (78),(88) désignent la même porte ET. La seule différence par rapport à la logique de la figure 2 est que le signal /AC3 n'est généré que si le module mémoire s'est décodé, ce qui est indiqué par le signal SELECT délivré par le contrôleur (5) à la troisième entrée d'une porte ET (712) à trois entrées. Le signal SELECT est ici nécessaire, car dans le cas du fonctionnement des mémoires dynamiques avec anticipation, MTCYCLE ne tient compte que de /AS. Inversement, lorsque le module mémoire dynamique n'anticipe pas ses cycles, ceux-ci ne sont amorcés (MTCYCLE valide) que si le module s'est décodé (le signal MTCYCLE tient donc compte dans ce cas de SELECT).

Le procédé peut être appliqué à une mémoire vive statique ou à une mémoire morte. Dans ce cas, les mémoires n'utilisent que le signal validant l'ensemble des lignes d'adresses. Le fonctionnement est analogue à celui d'une mémoire dynamique fonctionnant sans anticipation.

Une logique utilisable est celle de la figure 8, dans laquelle la porte NON-ET (812) à trois entrées reçoit sur sa troisième entrée le signal SELECT indiquant, lorsqu'il est actif, que le module mémoire s'est décodé. La porte ET (88) à deux entrées reçoit sur une première entrée un signal EXTCYCLE délivré par le contrôleur (5) et la deuxième entrée, la sortie d'une porte NON-ET (813) à deux entrées. La première entrée de la porte (813) est reliée à la sortie /Q de la bascule (810) et la deuxième entrée (813) est reliée à la sortie de l'unité de traitement (1) délivrant le signal /AS. Les autres éléments de la figure 8 sont câblés comme ceux de la figure 7.

Il est bien évident que d'autres modifications à la portée de l'homme de métier font également partie de l'esprit de l'invention.

REVENDICATIONS:

1. Procédé d'échange asynchrone entre un microprocesseur (1) et une mémoire dynamique (2) gérée par un contrôleur mémoire (5) caractérisé en ce qu'il comporte une étape de génération d'un signal d'acquittement /AC3 s'identifiant soit au signal /AC1 activé lorsque la mémoire n'est pas disponible lors de la demande d'échange, soit à un signal d'acquittement anticipé /AC2 synchrone de la demande d'échange matérialisée par un signal /AS délivré par le microprocesseur (1) lorsque la mémoire non occupée est attribuée au microprocesseur (1) et une étape de génération d'un signal de masquage F assurant le masquage du signal /AC3 dépendant du signal d'acquittement anticipé /AC2, pour garantir un temps de transfert minimum compatible avec le temps d'accès T de la mémoire.

2. Procédé d'échange selon la revendication 1 utilisant un signal d'acquittement /AC2 et un signal de masquage F caractérisé en ce qu'il s'applique au fonctionnement avec anticipation de mémoires dynamiques.

3. Procédé d'échange selon la revendication 1 utilisant un signal d'acquittement /AC2 et un signal de masquage F caractérisé en ce qu'il s'utilise avec une mémoire vive statique ou une mémoire morte.

4. Dispositif permettant la mise en oeuvre du procédé selon la revendication 1 caractérisé en qu'il comprend un circuit (7) de génération d'un signal d'acquittement /AC3 suite à la demande d'échange matérialisée par le signal /AS, un circuit (4) de génération du signal de masquage F à partir de la demande d'échange /AS de l'unité de traitement (1) et des signaux (CLK, DCLK) d'une horloge (3) et une porte NON-ET (14) recevant, d'une part le signal d'acquittement /AC3 et d'autre part le signal de masquage F.

5. Dispositif selon la revendication 4 caractérisé en ce qu'il comprend une porte NON-ET (212) de validation de la transmission du signal d'acquittement /AC3 lorsque le contrôleur mémoire (5) attribue la mémoire au microprocesseur (1) en délivrant le signal MTCYCLE.

6. Dispositif selon l'une des revendications 5 caractérisé en ce que le circuit de génération comprend une porte NON-ET (211) recevant d'une part le signal d'acquittement AC1 activé lorsque la mémoire n'est pas disponible, d'autre part le signal d'acquittement anticipé /AC2 délivré par la sortie Q d'une bascule (210) du type D dont l'entrée d'horloge H reçoit le signal de demande d'échange inversé, AS, l'entrée D, un signal CYCLE délivré par le contrôleur (5) indiquant que la mémoire travaille et sur l'entrée de mise à "1", S un signal délivré par la sortie d'une porte ET (28, 88, 78).

7. Dispositif selon la revendication 6 caractérisé en ce que la porte ET (28,78) reçoit d'une part un signal /TR délivré par le contrôleur (5), indiquant un temps de repos de la mémoire, d'autre part un signal /RZT délivré par l'alimentation et indiquant une réinitialisation.

8. Dispositif selon la revendication 6 caractérisé en ce que la porte ET (88) reçoit d'une part un signal /EXTCYCLE délivré par le contrôleur (5) et indiquant un cycle de la mémoire (2), extérieur au microprocesseur, et d'autre part la sortie d'une porte NON-ET (813) dont une entrée reçoit le signal /AS de demande d'échange et une deuxième entrée la sortie /Q de la bascule (840).

9. Dispositif selon la revendication 7 ou 8 caractérisé en ce que la porte NON-ET (712, 812) de validation de la transmission du signal d'acquittement reçoit également le signal SELECT délivré par le contrôleur (5) et indiquant que le module mémoire s'est décodé.

FIG.1

MODULE DE TRAITEMENT

MODULE MEMOIRE

BEXT

1/6

021763

0211763

FIG. 2

FIG. 7

FIG. 8

FIG. 9

0211763

# FIG. 3

FIG.4

0211763

## FIG. 5

## FIG. 6

Office européen
des brevets

## DOCUMENTS CONSIDERES COMME PERTINENTS

| Catégorie | Citation du document avec indication. en cas de besoin. des parties pertinentes | Revendication concernée | CLASSEMENT DE LA DEMANDE (Int Cl.4) |
|---|---|---|---|
| A | US-A-4 464 715  (STAMM)<br>* En entier *<br><br>--- | 1 | G 06 F  13/42 |
| A | MICROPROCESSORS AND MICROSYSTEMS, vol. 8, no. 7, septembre 1984, pages 324-337, Butterworth & Co. (Publishers) Ltd., Whitstable, Kent, GB; A. CLEMENTS: "The 68000 and its interface"<br>* Page 325, colonne de gauche, ligne 14 - page 326, colonne de droite, ligne 27; page 329, colonne de droite, ligne 4 - page 333, colonne de droite, ligne 26 *<br><br>----- | 1 | |

DOMAINES TECHNIQUES
RECHERCHES (Int. Cl.4)

G 06 F

Le présent rapport de recherche a été établi pour toutes les revendications

| Lieu de la recherche | Date d achèvement de la recherche | Examinateur |
|---|---|---|
| LA HAYE | 03-11-1986 | WANZEELE R.J. |